# EUROPEAN PATENT APPLICATION

(11) **EP 2 722 749 A2**
(43) Date of publication of application: **23.04.2014**
(21) Application number: 13188956.0
(22) Date of filing: 16.10.2013
(51) Int. Cl.: G06F 3/0488

(54) **Mobile terminal and control method based on user input for the same**

(30) Priority: 17.10.2012 KR 20120115204
(71) Applicant: Samsung Electronics Co., Ltd, Gyeonggi-do 443-742 (KR)
(72) Inventor: Nam, Hoongon, 443-742 Gyeonggi-do (KR); Kim, Myungsoo, 443-742 Gyeonggi-do (KR); Kim, Hyunjoon, 443-742 Gyeonggi-do (KR); Park, Yongwoon, 443-742 Gyeonggi-do (KR); Yang, Chulwoo, 443-742 Gyeonggi-do (KR); Lee, Jeeman, 443-742 Gyeonggi-do (KR); Kim, Hyeunkyu, 443-742 Gyeonggi-do (KR)
(74) Representative: Nederlandsch Octrooibureau

(57) **Abstract**

A mobile terminal and a control method based on a user input for the same are provided. A text string contained in content may be erased according to the user input, and the erased text string is stored. When the user input is entered at the erasure region, a result of comparison between the stored text string and the user input is output. The control method includes detecting a first input, identifying color distribution of an input region corresponding to the first input, and erasing at least one object in the input region by applying the most commonly used color to the input region based on the identified color distribution.

## Description

### BACKGROUND OF THE INVENTION

### 1. Field of the Invention:

The present invention relates to a method of controlling a mobile terminal based on a user input.More particularly, the present invention relates to a mobile terminal and a control method based on a user input for the same wherein a text string can be erased from content according to the user input and results of a comparison between an input text string and the erased text string can be displayed.

### 2. Description of the Related Art:

With recent technological advances, smart electronic devices have been increasingly utilized in voice communication, entertainment, culture, creative writing, and social networking. Smart electronic devices enable a mobile terminal to detect a user input using a finger or a stylus pen, so that the user may easily control the mobile terminal in any situation. With advanced detecting technology, a mobile terminal having a sensor may accurately recognize an elaborate user input entered using a stylus pen.

Smart electronic devices may be used as learning aids in education. However, current learning aids tend to be limited to drawing of simple pictures or providing answers to questions through a menu selection, and fail to fully utilize the user interface with various input means.

Therefore, a need exists for a mobile terminal and a control method based on a user input for the same wherein a text string contained in a content may be erased through input using a finger or pen.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a mobile terminal and a control method based on a user input for the same wherein a text string contained in a content may be erased through an input using a finger or pen.

Another aspect of the present invention is to provide a mobile terminal and a control method based on a user input for the same wherein an erased text string is stored and, when the user input is entered at the erasure region, a result of a comparison between the stored text string and the user input is output.

In accordance with an aspect of the present invention, a control method for a mobile terminal is provided.The control method includesdetecting a first input, identifying color distribution of an input region corresponding to the first input, and erasing at least one object in the input region by applying the most commonly used color to the input region based on the identified color distribution.

The object may include at least one text string and the first input may include at least one of a touch input using a finger or a pen and a proximity input.

The identifying of the color distribution may include dividing, when the input region exceeds a preset size, the input region into sub-regions and separately determining color distribution of the sub-regions, and the erasing of the at least one object may include erasing at least one object in the input region by applying the most commonly used colors to the sub-regions.

The erasing of the at least one object may include underlining or shading the input region where at least one object has been erased.

The erasing of the at least one object may include extracting at least one text string from the input region, and storing the extracted text string together with information regarding the input region.

The storing of the extracted text string may include storing at least one of information on content from which the text string has been extracted and information regarding the input region.

The control method may further include detecting a second input at the input region, extracting at least one input text string from the second input, comparing the input text string with the stored text string, and displaying comparison results of the text strings.

The displaying of the comparison results may include displaying at least one of identical portions of the compared text strings, non-identical portions of the compared text strings, a score computed based on the text comparison result, a list of input text strings, and a list of stored text strings.

The displaying of the comparison results may include displaying comparison results using at least one of an underline, a strikethrough, and shading.

In accordance with another aspect of the present invention, a mobile terminal is provided. The mobile terminal includes a display unit for displaying at least one object, an input unit for detecting a first input, and a control unit for identifying color distribution of an input region corresponding to the first input, and for controlling the display unit to erase the object by applying the most commonly used color to the input region based on the identified color distribution.

The object may include at least one text string and the first input may include at least one of a touch input using a finger or a pen and a proximity input.

When the input region exceeds a preset size, the control unit may divide the input region into sub-regions, separately determine color distribution of the sub-regions, and control the display unit to erase the object by applying the most commonly used colors to the sub-regions.

The control unit may control the display unit to underline or shade the input region where at least one object has been erased.

The mobile terminal may further include a storage unit for storing data, and the control unit may extract at least one text string from the input region and control the storage unit to store the extracted text string together with information regarding the input region.

The storage unit may store at least one of information on content from which the text string has been extracted and information regarding the input region.

The input unit may detect a second input at the input region, and the control unit may extract at least one input text string from the second input, compare the input text string with the stored text string, and control the display unit to display comparison results of the text strings.

The control unit may control the display unit to display at least one of identical portions of the compared text strings, non-identical portions of the compared text strings, a score computed based on the text comparison result, a list of input text strings, and a list of stored text strings.

The control unit may control the display unit to display comparison results using at least one of an underline, a strikethrough, and shading.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of a mobile terminal according to an exemplary embodiment of the present invention;

FIG. 2 illustrates a configuration of an input unit of a mobile terminalaccording to an exemplary embodiment of the present invention.

FIG. 3 is a flowchart of a control method for a mobile terminal according to an exemplary embodiment of the present invention;

FIG. 4 illustrates a user input for erasing a text stringaccording to an exemplary embodiment of the present invention;

FIG. 5 illustrates a user input for erasing a text stringaccording to an exemplary embodiment of the present invention;

FIG. 6 illustrates color distribution in an erasure regionaccording to an exemplary embodiment of the present invention;

FIG. 7 illustrates color distribution in a segmented erasure regionaccording to an exemplary embodiment of the present invention;

FIG. 8 is an illustration of erasing a text stringaccording to an exemplary embodiment of the present invention;

FIG. 9 is an illustration of erasing a text stringaccording to an exemplary embodiment of the present invention;

FIG. 10 is an illustration of erasing a text stringaccording to an exemplary embodiment of the present invention;

FIG. 11 is a flowchart of a control method for a mobile terminal according to an exemplary embodiment of the present invention;

FIG. 12 illustrates an input of a text string at a region where a text string has been erasedaccording to an exemplary embodiment of the present invention;

FIG. 13 is an illustration of a comparison result outputaccording to an exemplary embodiment of the present invention;

FIG. 14 is an illustration of a comparison result outputaccording to an exemplary embodiment of the present invention;

FIG. 15 is an illustration of a comparison result outputaccording to an exemplary embodiment of the present invention; and

FIG. 16 illustrates a display of incorrect answersaccording to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the inventionas defined by the claims and their equivalents.It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces,

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention are applicable to control of a terminal based on a user input.

Exemplary embodiments of the present invention may be applied to any information appliance capable of detecting a user input, such as a smartphone, a portable terminal, a mobile terminal, a Personal Digital Assistant (PDA), a Portable Multimedia Player (PMP), a laptop computer, a note pad, a Wireless Broadband (WiBro) terminal,a tablet computer, and the like. Exemplary embodiments of the present invention may also be applied to a consumer electronic device capable of detecting a user input, such as a smart TV or smart refrigerator.

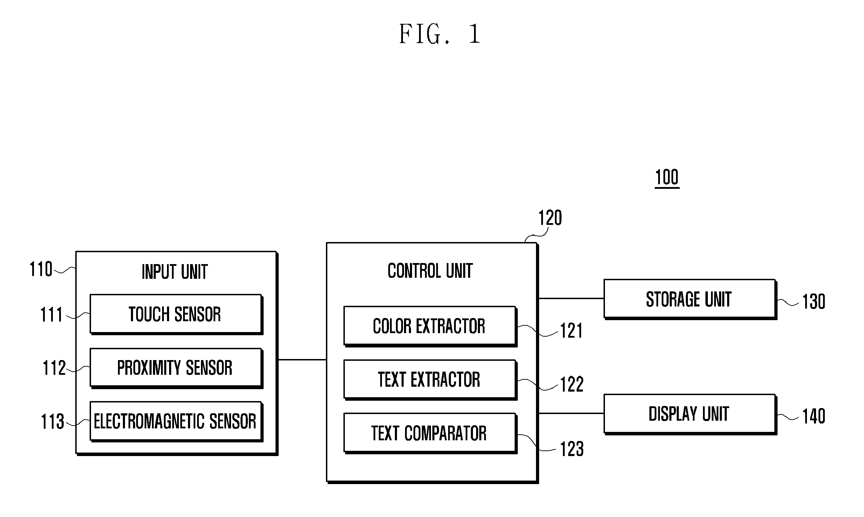

FIGs. 1 through 16, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is a block diagram of a mobile terminal according to an exemplary embodiment of the present invention.

Referring to FIG. 1, a mobile terminal 100 may include an input unit 110, a control unit 120, a storage unit 130, and a display unit 140.

The input unit 110 generates an input signal corresponding to user manipulation. The input unit 110 may include a touch sensor 111, a proximity sensor 112, and an electromagnetic sensor 113.

The touch sensor 111 may detect a user touch input and may include a touch film, a touch sheet,a touch pad, and the like. The touch sensor 111 may detect a touch input and send a touch signal corresponding to the touch input to the control unit 120. The control unit 120 may analyze the touch signal and perform a corresponding operation. Information indicated by the touch signal may be displayed on the display unit 140. The touch sensor 111 may detect a user touch input through various input means, such as a finger, a stylus pen,a button of the stylus pen, and the like. The touch sensor 111 may be configured to detect both a direct touch input and a contactless input within a given distance.

The proximity sensor 112 may detect presence, access, movement, direction, speed or shape of an object on the detection surface of the input unit 110 without any physical contact using an electromagnetic field. The proximity sensor 112 may be a through-beam, retro-reflective or diffuse reflective photoelectric sensor, or a high frequency oscillation, capacitive, magnetic, or infrared proximity sensor.

The electromagnetic sensor 113 may detect a touch input or a proximity input according to changes in electromagnetic field intensity, and may be configured as an ElectroMagnetic Resonant (EMR) or as an ElectroMagnetic Interference (EMI) input pad. The electromagnetic sensor 113 may include a coil producing a magnetic field, and may detect the presence of an object containing a resonant circuit causing a change in the magnetic field. The electromagnetic sensor 113 may detect an input by a stylus pen or the like acting as an object containing a resonant circuit. The electromagnetic sensor 113 may detect both a direct contact with the mobile terminal 100 and proximity or hovering without a direct contact.

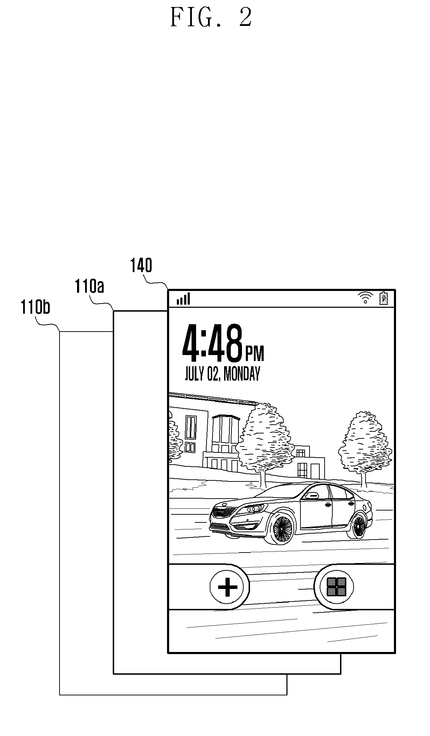

FIG. 2 illustrates a configuration of an input unit of a mobile terminalaccording to an exemplary embodiment of the present invention.

Referring to FIG. 2, the input unit 110 may include a first input pad 110a and a second input pad 110b as a layered structure. The first input pad 110a and second input pad 110b may each be a touch or pressure pad, including the touch sensor 111 and the proximity sensor 112, or an electromagnetic or EMR pad, including the electromagnetic sensor 113. The first input pad 110a and second input pad 110b correspond to different input means, and detect an input from the different input means. For example, the first input pad 110a may be a touch pad for detecting a touch input through a finger, and the second input pad 110b may be an EMR pad for detecting an input through a pen. In addition, the input unit 110 and the display unit 140 may be combined to form a layered structure. The first input pad 110a and second input pad 110b may be placed below the display unit 140 so as to detect an input through icons, menus, and buttons displayed on the display unit 140. The display unit 140 may be realized using a display panel or a touchscreen panel including an input means.

The combination of the input unit 110 and the display unit 140 shown in FIG. 2 is just an illustration. For example, types and number of input pads constituting the input unit 110, and arrangement of input pads and the display unit 140 may be varied according to manufacturing conditions.

More particularly, the input unit 110 may detect a user input indicating a text string. The input unit 110 may also detect a user input indicating a region where a text string has been erased.

Referring back to FIG. 1, the control unit 120 may control other components for normal operation of the mobile terminal 100. For example, the control unit 120 may control operations or functions of the mobile terminal 100 according to the user input detected through the input unit 110.

The control unit 120 may include a color extractor 121, a text extractor 122, and a text comparator 123.

The color extractor 121 may extract color information of an object displayed on the display unit 140. The color extractor 121 may extract color values for a given region or pixel. The color extractor 121 may extract color information as RGB color values or palette color values.

The text extractor 122 may extract text from content. The text extractor 122 may extract a text string from content or user input. Here, a text string may include a character, a numeral, a special character, a symbol,a space, and the like. The text extractor 122 may recognize a text string using pattern matching and structural analysis and convert the text string into an analog signal or digital codes. The text extractor 122 may include an Optical Character Reader (OCR) and an Optical Mark Reader (OMR).

The text comparator 123 may perform text comparison by comparing two text strings to determine whether the two text strings are identical. The text comparator 123 may use, for example, a "strcmp" function to compare two text strings.

When a user input is entered through the input unit 110, the control unit 120 may extract color information of a region indicated by the user input. The control unit 120 may identify color distribution of the region and the most commonly used color in the input region. The control unit 120 may erase an object in the input region by applying the most commonly used color to the input region.

The control unit 120 may extract a text string present in a region through the text extractor 122, and control the storage unit 130 to store the extracted text string.

When a user input is entered, the control unit 120 may control the text extractor 122 to extract a text string from the user input, control the text comparator 123 to compare the extracted text string with the stored text string, and control the display unit 140 to display the text comparison result.

Operation of the control unit 120 is described below with reference to the drawings.

The storage unit 130 may store programs and commands for the mobile terminal 100. The control unit 120 may execute a program or a command stored in the storage unit 130.

The storage unit 130 may include one or more of various types of storage media, such as a flash memory, a hard disk, a multimedia or other memory card (i.e., a micro Secure Digital (SD) or eXtreme Digital (XD)), a Random Access Memory (RAM), a Static Random Access Memory (SRAM), a Read Only Memory (ROM), a Programmable Read-Only Memory (PROM), an Electrically Erasable Programmable Read-Only Memory (EEPROM), a magnetic memory, a magnetic disk, an optical disc, and the like.

In one exemplary embodiment, the storage unit 130 may store content containing at least one text string. The storage unit 130 may temporarily or semi-permanently store text strings extracted from content or a user input. Here, an extracted text string may be stored together with information describing the source content and extraction location. An extracted text string may be stored in connection with the source content.

The storage unit 130 may store information on an operation applied to the user input entered through the input unit 110. For example, the storage unit 130 may store information on an erase or a compare operation applied to a given user input.

The display unit 140 displays information processed or to be processed by the mobile terminal 100. For example, the display unit 140 may display a User Interface (UI) or Graphical User Interface (GUI) related to voice detection, context awareness, function control,and the like.

The display unit 140 may be realized using one or more of display techniques based on a Liquid Crystal Display (LCD), a Thin Film Transistor-Liquid Crystal Display (TFT-LCD), an Organic Light Emitting Diode (OLED), a flexible display, a 3 Dimensional (3D) display,and the like.

When the display unit 140 is layered with the touch sensor of the input unit 110, it may act as a touchscreen. In this case, the display unit 140 may act as an input means as well as a display means.

More particularly, the display unit 140 may display specific content containing at least one text string under control of the control unit 120. The display unit 140 may display a portion of the content with erasure of a text string, or display a result of a comparison between text strings.

As the components of the mobile terminal 100 shown in FIG. 1 are not indispensable, a new component may be added or an existing component may be omitted or replaced.

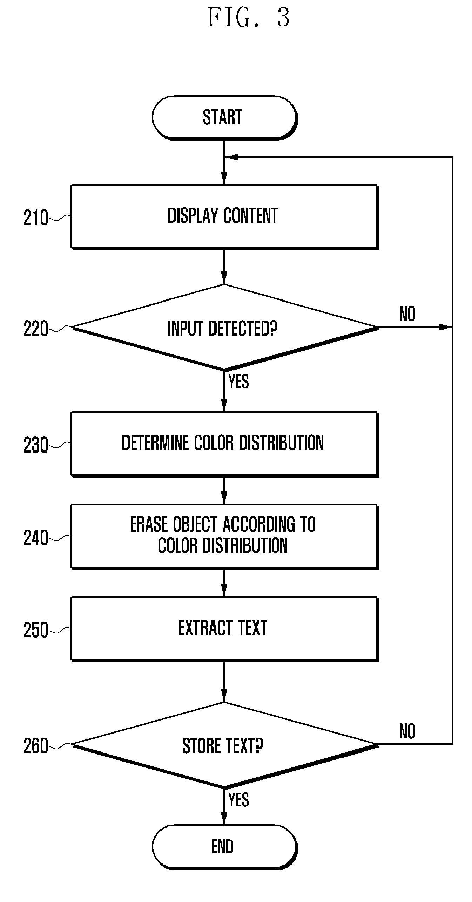

FIG. 3 is a flowchart of a control method for a mobile terminal according to an exemplary embodiment of the present invention.

Referring to FIG. 3, in the control method, the mobile terminal 100 displays content in step 210. The mobile terminal 100 may display content according to a user request. The content may contain at least one object and may be a memo, an e-book, or a dictionary containing at least one text string as an object. A text string may include a character, a numeral, a special character, a symbol,a space,and the like. The mobile terminal 100 may execute an application or program providing a service for content display.

The mobile terminal 100 receives a user input for the content in step 220. The mobile terminal 100 may receive a user input indicating a text string contained in the content. Here, the user input may be a touch input with a finger or a pen or a proximity input. The user input may correspond to a command for deleting an object from the content.

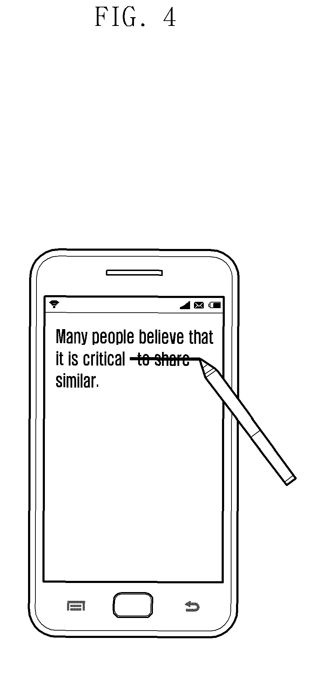

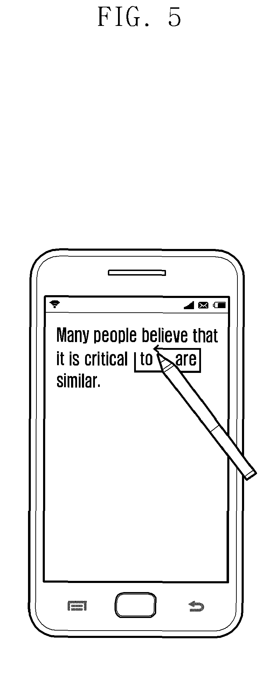

FIG. 4 illustrates a user input for erasing a text stringaccording to an exemplary embodiment of the present invention. FIG. 5 illustrates a user input for erasing a text stringaccording to an exemplary embodiment of the present invention.

Referring to FIG. 4, a user input may correspond to striking out a text string "to share". Referring to FIG. 5, a user input may correspond to drawing a closed line on a region enclosing a text string "to share".

Referring to FIG. 3, when a user input is received, the mobile terminal 100 identifies color distribution in the input region in step 230. The mobile terminal 100 may identify color distribution in a region within a preset distance from the input point. The input region may contain at least one object and a background image. The object may be a text string. The mobile terminal 100 may determine the input region and identify color distribution in the input region in real time, or may determine the input region first and identify color distribution in the input region.

The mobile terminal 100 may extract color information for sub-regions or pixels of the input region. The mobile terminal 100 may extract color information as RGB color values or palette color values. The mobile terminal 100 may count frequencies of color values used in the region to identify color distribution in the region. Hence, the mobile terminal 100 may identify the most commonly used color in the region. Here, the most commonly used color may correspond to the color of a background image of the indicated object.

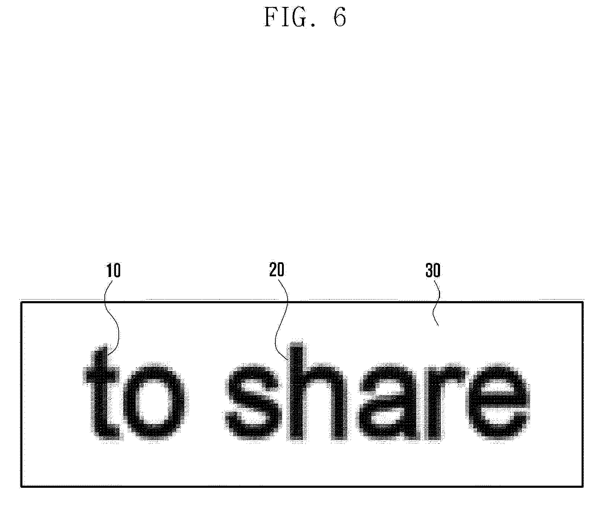

FIG. 6 illustrates color distribution in an erasure regionaccording to an exemplary embodiment of the present invention.

Referring to FIG. 6, the input region may contain a string "to share" and a background image thereof. The input region may include multiple pixels. Each pixel may have one of a text color 10 for text, a spread color 20 in-between text and background, and a background color 30. The text color 10 and background color 30 may include two or more colors according to the color of content. The spread color 20 may include two or more colors according to the resolution of content.

The mobile terminal 100 may extract color values of pixels in an input region. The mobile terminal 100 may extract the text color 10, the spread color 20, and the background color 30 of each pixel. The mobile terminal 100 may identify distribution of the extracted colors. For example, the mobile terminal 100 may count the number of pixels having the text color 10, the number of pixels having the spread color 20, and the number of pixels having the background color 30 to identify color distribution. The mobile terminal 100 may identify the most commonly used color in the input region. In FIG. 6, the most commonly used color is the background color 30.

When the input region exceeds a preset size, the mobile terminal 100 may identify color distribution by dividing the input region into sub-regions. When the input region exceeds a preset size, the mobile terminal 100 may identify color distribution of sub-regions in real-time while the user input is being processed. When the input region exceeds a preset size, the mobile terminal 100 may repeatedly identify color distribution of sub-regions in real-time. Alternatively, the mobile terminal 100 may determine the input region after the user input is processed, divide, when the input region exceeds a preset size, the input region into sub-regions, and identify color distribution of the sub-regions.

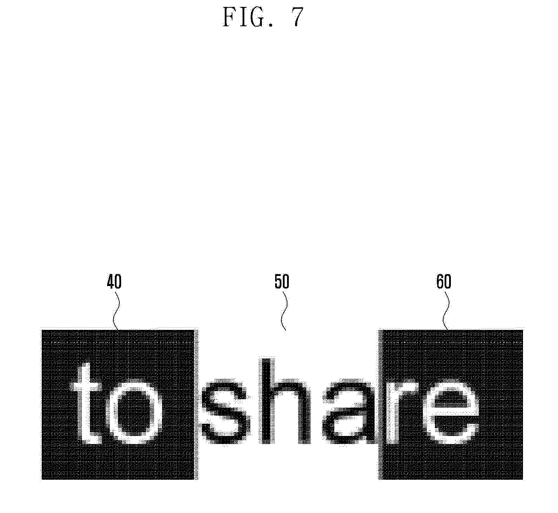

FIG. 7 illustrates color distribution in a segmented erasure regionaccording to an exemplary embodiment of the present invention.

Referring to FIG. 7, the input region may contain a string "to share" and a background image thereof. The input region may include multiple pixels, and each pixel may have one of a text color, a spread color, and a background color. The text colors and the background colors may vary in the input region. In FIG. 7, the text colors and the background colors may be different in a first sub-region 40, a second sub-region 50, and a third sub-region 60. When the preset size is the same as that of the sub-regions 40 to 60, the mobile terminal 100 may identify color distribution for each of the sub-regions 40, 50, and 60. The mobile terminal 100 may obtain a text color, a spread color, and a background color of each pixel in each sub-region. For each sub-region, the mobile terminal 100 may identify distribution of the extracted colors and identify the most commonly used color. In FIG. 7, the most commonly used colors for the sub-regions 40, 50, and 60 are different background colors.

Referring to FIG. 3, the mobile terminal 100 erases an object according to color distribution in step 240. The mobile terminal 100 may erase an object in the input region by applying the most commonly used color to the input region. To be more specific, within the input region, the mobile terminal 100 may change a color other than the most commonly used color to the most commonly used color. For example, the mobile terminal 100 may change the color of a text string (i.e., an object) in the input region to the background color (i.e., most commonly used color), to produce the same effect as erasing an object indicated by the user input from the content.

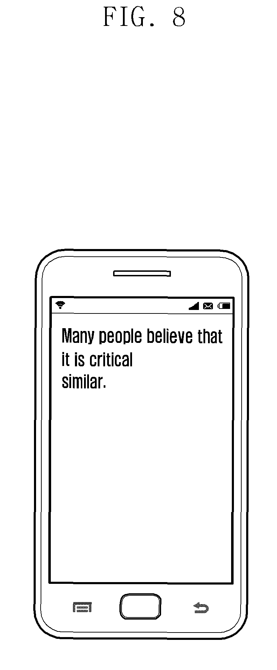

FIG. 8 is an illustration of erasing a text stringaccording to an exemplary embodiment of the present invention.

Referring to FIG. 8, the mobile terminal 100 may erase a text string "to share" by applying the most commonly used color to the input region shown in FIG. 4 or FIG. 5.

When the most commonly used color is found for each sub-region, the mobile terminal 100 may apply the most commonly used color to each corresponding sub-region, producing a gradation or fading effect in the input region with object erasure.

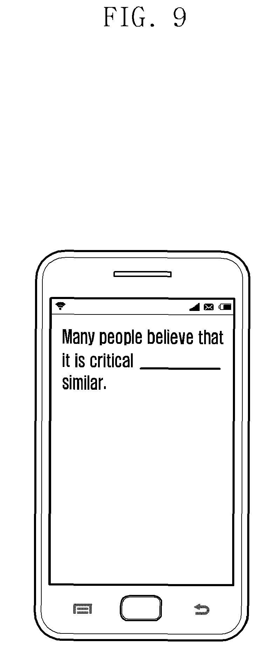

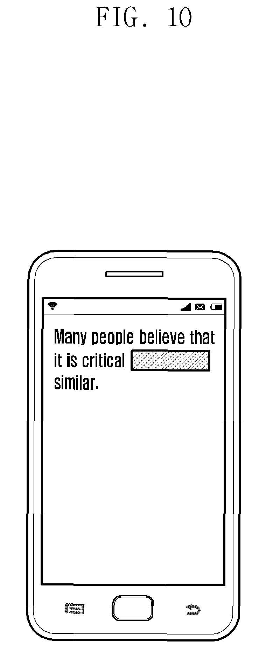

FIG. 9 is an illustration of erasing a text stringaccording to an exemplary embodiment of the present invention.FIG. 10 is an illustration of erasing a text stringaccording to an exemplary embodiment of the present invention.

Referring to FIGs. 9 and 10, the mobile terminal 100 may underline or shade the region where a text string is erased. For example, the mobile terminal 100 may underline the region where a text string "to share" is erased as shown in FIG. 9. The mobile terminal 100 may shade the region where a text string "to share" is erased as shown in FIG. 10.

Referring to FIG. 3, the mobile terminal 100 extracts a text string in step 250. The mobile terminal 100 may extract at least one text string from the input region. When an object in the input region contains at least one text string, the mobile terminal 100 may recognize the text string through pattern matching and structure analysis, and extract the recognized text string.

The mobile terminal 100 stores the extracted text string in step 260. The mobile terminal 100 may store the text string together with information describing the input region where the text string is erased. The mobile terminal 100 may store the text string together with information describing the source content (for example, content name, player file location, content author,and the like) and information on the input region (for example, page, paragraph, line, coordinates,and the like).

The mobile terminal 100 determineswhether a termination request is issued. When a termination request is issued, the mobile terminal 100 ends operation on the content. When a termination request is not issued, the mobile terminal 100 returns to step 210 and continues the procedure.

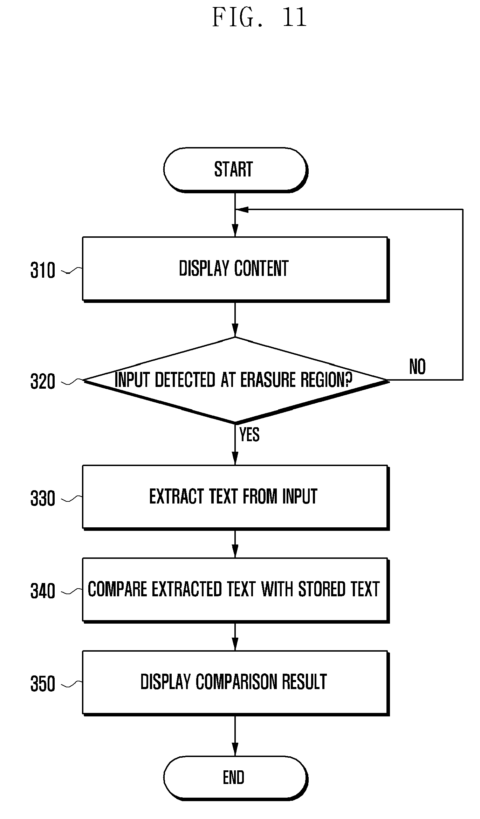

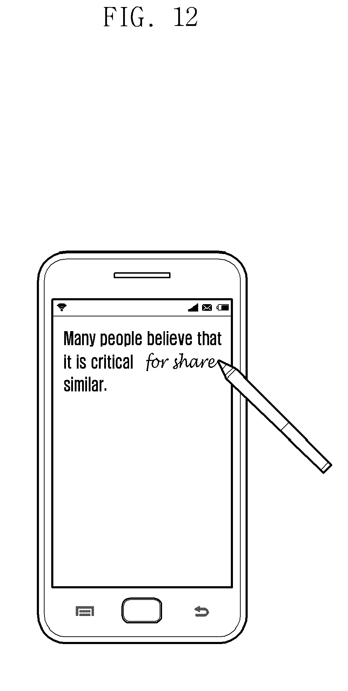

FIG. 11 is a flowchart of a control method for a mobile terminal according to an exemplary embodiment of the present invention. FIG. 12 illustrates an input of a text string at a region where a text string has been erasedaccording to an exemplary embodiment of the present invention.

Referring to FIGs. 11 and 12, in the control method, the mobile terminal 100 displays content in step 310. The mobile terminal 100 may display content according to a user request. The content may contain at least one object and may be a memo, an e-book, or a dictionary containing at least one text string as an object. A text string may include a character, a numeral, a special character, a symbol,a space,and the like. The mobile terminal 100 may execute an application or program providing a service for content display. More particularly, the content may contain a region where at least one object has been erased and at least one text string has been extracted for storage according to the user input.

The mobile terminal 100 detects the user input at an erasure region in step 320. The mobile terminal 100 may detect the user input at a previous input region where an object has been erased. The previous input region where an object has been erased may be a region where at least one text string has been extracted for storage. Here, the user input may be touch input with a finger,a pen, or a proximity input. For example, referring to FIG. 12, the user input may be a text string "for share" at a region where a text string "to share" has been erased.

When the user input isdetected, the mobile terminal 100 extracts a text string from the user input in step 330. The mobile terminal 100 may extract recognizable text from the detected user input. The mobile terminal 100 may recognize the text string through pattern matching and structure analysis, and extract the recognized text string. For example, referring to FIG. 12, the mobile terminal 100 may extract a text string "for share" from the user input. The mobile terminal 100 may temporarily or semi-permanently store the extracted text string.

In step 340, the mobile terminal 100 compares the extracted text string with the stored text string. The mobile terminal 100 may find a text string that has been extracted from the previous input region and stored. The text string to be found may have been stored together with information on a region where the text string has been extracted (or where a corresponding object has been erased). When such a text string is found, the mobile terminal 100 compares the text string extracted from the user input with the stored text string. The mobile terminal 100 may use the "strcmp" function for text comparison. Text comparison may be performed on a word basis in consideration of a space character. The mobile terminal 100 may determine whether the extracted text string is identical to the stored text string based on the text comparison result. The mobile terminal 100 may temporarily or semi-permanently store the text comparison result. When text comparison is repeatedly performed, the mobile terminal 100 may display a list of text comparison results as a note of incorrect answers.

The mobile terminal 100 outputs the comparison result in step 350. The mobile terminal 100 may display identical and non-identical portions of the compared text strings, a score computed based on the text comparison result, and a list of input and stored text strings. The mobile terminal 100 may use at least one of an underline, a strikethrough, and shading to highlight the comparison result. The mobile terminal 100 may display non-identical portions of the compared text strings together with one of the extracted text string and the stored text string. The mobile terminal 100 may display the extracted text string and the stored text string in a preset layout.

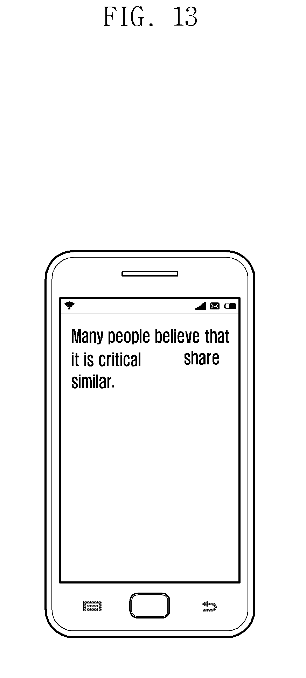

FIG. 13 is an illustration of a comparison result outputaccording to an exemplary embodiment of the present invention.

Referring to FIG. 13, the mobile terminal 100 receives a user input "for share" at an erasure region where a text string "to share" has been extracted for storage and erased. The mobile terminal 100 extracts a text string "for share" from the user input and compares the text string "for share" with the stored text string "to share". After a text comparison, the mobile terminal 100 may display the identical portion "share".

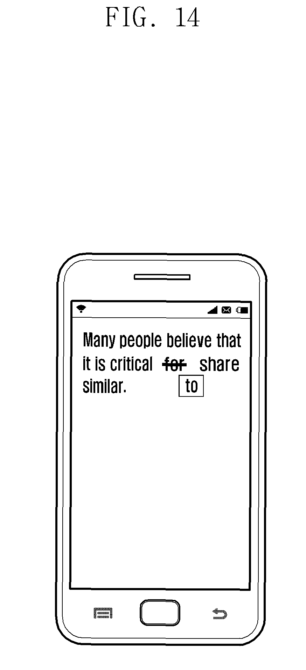

FIG. 14 is an illustration of a comparison result outputaccording to an exemplary embodiment of the present invention.

Referring to FIG. 14, the mobile terminal 100 may display the identical portion "share" after a text comparison. The mobile terminal 100 may further display the non-identical portion "for" of the text string extracted from the user input highlighted by astrikethrough. The mobile terminal 100 may further display the non-identical portion "to" of the stored text string. Here, "for" and "to" may be placed in upper and lower positions.

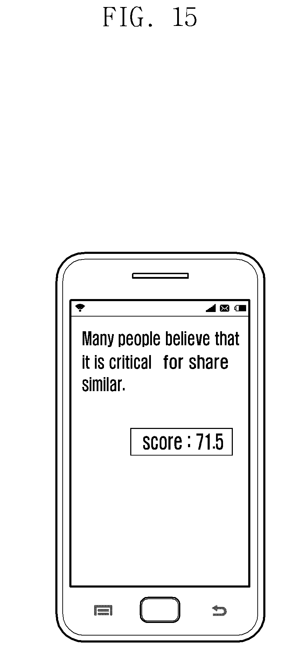

FIG. 15 is an illustration of a comparison result outputaccording to an exemplary embodiment of the present invention.

Referring to FIG. 15, after a text comparison, the mobile terminal 100 may compute a score based on the identical and non-identical portions of the compared text strings. For example, the mobile terminal 100 may compute a score based on the number of characters in the identical portion and the number of characters in the non-identical portion with reference to the number of characters in the extracted text string or in the stored text string. In FIG. 15, as "share" is the identical portion of the stored text string "to share", the mobile terminal 100 may obtain a score of 71.5 (5÷7×100=71.5). The mobile terminal 100 may display the computed score and temporarily or semi-permanently store the computed score.

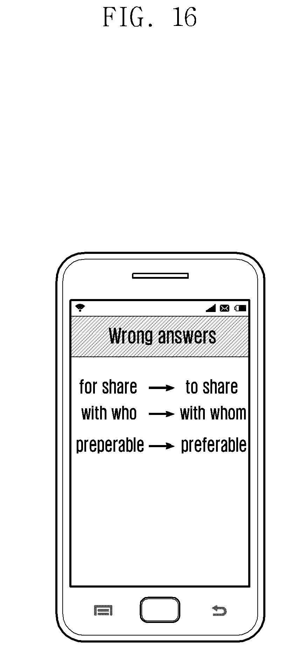

FIG. 16 illustrates a display of incorrect answersaccording to an exemplary embodiment of the present invention.

Referring to FIG. 16, the mobile terminal 100 may display a list of stored text strings and/or text strings extracted from auser input according to a user request. The mobile terminal 100 may display a stored text string in conjunction with a text string extracted from the user input detected at a region where the stored text string has been extracted and erased. The user may learn a language, mathematics, history, geography, and the like, by comparing an input text string with the original text string that has been erased from the content.

In an exemplary embodiment of the present invention, a control method based on a user input enables a mobile terminal to erase a text string in a simple and effective way according to the user input based on content color distribution.

The mobile terminal may identify and store an erased text string, and output, when theuser input is entered at the erasure region, a result of a comparison between the stored text string and the user input. Hence, exemplary embodiments of the present invention may be used for fill-in-the-blanks exercises, and the like, in learning content.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A control method for a mobile terminal, the method comprising:
detecting a first input;
identifying color distribution of an input region corresponding to the first input; and
erasing at least one object in the input region by applying the most commonly used color to the input region on the basis of the identified color distribution.

2. The control method of claim 1, wherein the object comprises at least one text string.

3. The control method of claim 1, wherein the identifying of the color distribution comprises dividing, when the input region exceeds a preset size, the input region into sub-regions and separately determining color distribution of the sub-regions, and wherein the erasing of the at least one object comprises erasing at least one object in the input region by applying the most commonly used colors to the sub-regions.

4. The control method of claim 1, wherein the erasing of the at least one object comprises underlining or shading the input region where at least one object has been erased.

5. The control method of claim 1, wherein the erasing of the at least one object comprises:
extracting at least one text string from the input region; and
storing the extracted text string together with information regarding the input region.

6. The control method of claim 5, wherein the storing of the extracted text string comprises storing at least one of information on content from which the text string has been extracted and information regarding the input region.

7. The control method of claim 5, further comprising:
detecting a second input at the input region;
extracting at least one input text string from the second input;
comparing the input text string with the stored text string; and
displaying comparison results of the text strings.

8. The control method of claim 7, wherein the displaying of the comparison results comprises displaying at least one of identical portions of the compared text strings, non-identical portions of the compared text strings, a score computed based on the text comparison result, a list of input text strings, and a list of stored text strings.

9. A mobile terminal comprising:
a display unit for displaying at least one object;
an input unit for detecting a first input; and
a control unit for identifying color distribution of an input region corresponding to the first input, and for controlling the display unit to erase the object by applying the most commonly used color to the input region on the basis of the identified color distribution.

10. The mobile terminal of claim 9, wherein the control unit divides, when the input region exceeds a preset size, the input region into sub-regions, separately determines color distribution of the sub-regions, and controls the display unit to erase the object by applying the most commonly used colors to the sub-regions.

11. The mobile terminal of claim 9, wherein the control unit controls the display unit to underline or shade the input region where at least one object has been erased.

12. The mobile terminal of claim 9, further comprising:
a storage unit for storing data, and wherein the control unit extracts at least one text string from the input region and controls the storage unit to store the extracted text string together with information regarding the input region.

13. The mobile terminal of claim 12, wherein the storage unit stores at least one of information on content from which the text string has been extracted and information regarding the input region.

14. The mobile terminal of claim 12, wherein the input unit detects a second input at the input region, and wherein the control unit extracts at least one input text string from the second input, compares the input text string with the stored text string, and controls the display unit to display comparison results of the text strings.

15. The mobile terminal of claim 14, wherein the control unit controls the display unit to display at least one of identical portions of the compared text strings, non-identical portions of the compared text strings, a score computed based on the text comparison result, a list of input text strings, and a list of stored text strings.
